# DEMANDE DE BREVET EUROPEEN

(11) **EP 0 556 522 A1**
(43) Date de publication de la demande: **25.08.1993**
(21) Numéro de dépôt: 92400439.3
(22) Date de dépôt: 19.02.1992
(51) Int. Cl.: H02G 15/117, H02G 15/26

(54) **Bouchon de pressurisation des câbles de télécommunications**

(71) Demandeur: FRANCE TELECOM, F-75505 Paris Cedex 15 (FR)
(72) Inventeur: Morizot, Jean-Guy, F-75016 Paris (FR)
(74) Mandataire: Armengaud Ainé, Alain

(57) **Abrégé**

Bouchon de pressurisation pour câbles de télécommunications ou autres constitué de deux demi-coquilles à l'intérieur desquelles est injectée de la résine, deux prises d'air pontable pouvant mettre en communication les deux parties du câble séparées par le bouchon.

## Description

La présente invention a pour objet un bouchon de pressurisation ou d'isolation avec prise d'air intégrée portable assurant en un seul dispositif les fonctions de bouchon d'étanchéité et de prise d'alimentation et de mesure d'air.

On sait que dans le domaine des télécommunications, il est maintenant courant d'injecter dans les câbles enterrés de l'air sous pression. Une telle pressurisation permet la surveillance pneumatique et la maintenance préventive du réseau, la vérification technique de la qualité des travaux, la localisation des défauts, etc...

Dans les canalisations qui sont actuellement en service, il est nécessaire de réaliser des bouchons permettant, par exemple, le blocage de l'air à l'extrêmité d'un câble pressurisé. Des bouchons sont également nécessaires lorsque certains éléments inclus dans le câble ne sont pas pressurisables, cas dans lequel une dérivation ou pontage des composants non pressurisables doivent être effectués. Il s'agit donc de réaliser une double isolation, d'une part vis à vis de l'extérieur, et d'autre part vis à vis de l'air sous pression à l'intérieur du câble.

D'une manière générale le procédé de réalisation d'un bouchon d'étanchéité à l'air consiste à ouvrir le câble, à aérer les conducteurs et à injecter entre et autour de ceux-ci une résine durcissable à l'aide d'une pompe.

EP-A-0 358 542 décrit un procédé de réalisation d'un bouchon de pressurisation et un dispositif de mise en oeuvre dans lequel une résine polymérisable mélangée à son durcisseur est injectée dans un moule constitué de deux demi-coquilles mises en place sur le câble et réunies par un joint d'étanchéité et des colliers. Par la simplicité de sa mise en oeuvre, le bouchon décrit donne toute satisfaction. Il permet après un simple dénudage de créer des bouchons de pressurisation en des endroits quelconques des câbles.

Pour des câbles de grande longueur comprenant un grand nombre de tronçons généralement de 300 ou de 600 mètres il est nécessaire de prévoir des stations de raccordement avec des boîtiers de liaison des conducteurs, assurant les jonctions nécessaires entre ceux-ci, d'un tronçon de câble au suivant. Mais ces stations de raccordement sont conçues de telle sorte qu'elles ne supportent pas toujours la pression d'air sec nominale intérieure au câble cette pression étant de l'ordre de 500 mbars. Il est donc indispensable d'étanchéifier l'extrêmité de chaque tronçon avant son raccordement à une station puis de raccorder les deux tronçons d'un point de vue pneumatique pour que la pression d'air soit effectivement rétablie dans les enveloppes des câbles. Une telle opération est coûteuse et difficile à réaliser et elle s'oppose à l'obtention d'une pressurisation homogène et régulière du câble sur toute la longueur.

La présente invention a pour objet de pallier cet inconvénient.

Selon l'invention, un bouchon de pressurisation comprenant deux demi-coquilles réunies par un joint et des colliers de serrage, un embout d'injection de la résine et un embout d'évacuation de l'air intérieur à la coquille est caractérisé en ce qu'il comprend au moins un conduit dont l'extrêmité avant pénètre à l'intérieur des conducteurs d'un tronçon de câble et dont l'autre extrêmité débouche à l'extérieur de la coquille.

Ainsi, il est possible d'utiliser cette canalisation auxiliaire pour raccorder un tronçon à une source d'air sous pression.

Selon une autre caractéristique de l'invention, le bouchon comprend deux canalisations, chacune d'entre elles débouchant dans le câble de part et d'autre du bouchon de pressurisation.

Selon encore une autre caractéristique de l'invention, l'extrêmité desdites canalisations est ogivale ou arrondie afin de ne pas blesser les conducteurs.

Selon l'invention, les conduits auxiliaires prévus à l'intérieur du bouchon permettent tous les raccordements pneumatiques nécessaires notamment au pontage des stations mentionnées précédemment. Bien entendu, ces canalisations comprennent des valves de réglage de pression.

D'autres caractéristiques et avantages de l'invention apparaîtront au cours de la description qui va suivre d'un mode particulier de réalisation donné à titre d'exemple non limitatif en regard des figures qui représentent :
- La figure 1 une vue en coupe verticale partielle d'un bouchon selon l'invention;
- la figure 2, une valve de prise d'air montée sur une canalisation.

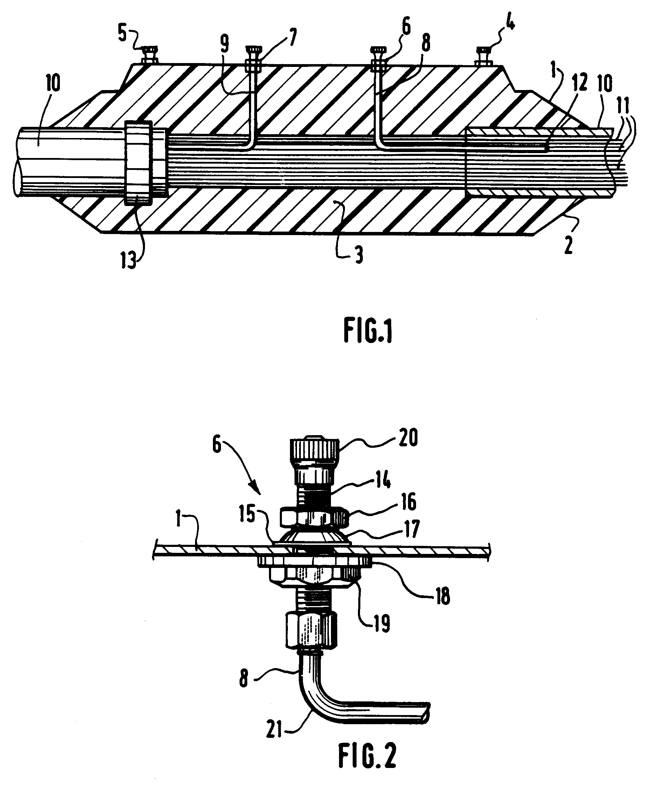

Sur la figure 1, on voit que le bouchon de pressurisation se compose d'une demi-coquille supérieure 1 et d'une demi-coquille inférieure 2 réunies, comme indiqué dans le document mentionné ci-dessus par des colliers et des joints (non représentés). A l'intérieur de l'enceinte creuse formée par la réunion des deux demi-coquilles sur les extrêmités 10 de deux tronçons de câble, est injectée de la résine 3 qui obture complètement l'enceinte. La résine est injectée par un embout 4, un embout 5 permettant d'évacuer l'air se trouvant à l'intérieur de la coquille lors de l'injection. Comme indiqué précédemment, les tronçons de câble 10 sont des tronçons pressurisés c'est à dire qu'une pression d'air sec règne à l'intérieur des enveloppes.

Les conducteurs 11 sont bien entendu enfermés dans l'enveloppe. La résine 3 entoure les conducteurs 11 et pénètre entre ceux-ci pour assurer une étanchéité parfaite.

Conformément à l'invention, on prévoit à l'intérieur de la coquille, au moins une canalisation auxiliaire 8 qui, à son extrêmité supérieure extérieure, se termine par une valve et, à son autre extrêmité 12 se termine par un embout sensiblement ogival. La canalisation 8 est de préférence en matière plastique et son extrêmité 13 ou canule pénétre entre des conducteurs 11 sans blesser ceux-ci, grâce à sa forme arrondie.

De préférence deux prises d'air 6 et 7 correspondant respectivement aux canalisations 8 et 9 sont prévues dans un bouchon ceci afin de pouvoir éventuellement établir une liaison pneumatique entre les deux tronçons de câble, malgré l'existence du bouchon, en réunissant simplement les deux valves 6 et 7.

Lors du montage, un anneau de mastic 13 (partie gauche de la figure 1) assure l'accrochage de la résine.

La figure 2 représente le montage d'une valve ou prise d'air sur la demi-coquille supérieure 1. Une tige filetée 14 traverse le trou 15 formé dans la coquille 1 et est fixée sur celui-ci au moyen d'un écrou 16, d'une rondelle métallique 17 et du côté intérieur de la coquille, par un joint de caoutchouc 18 et d'un contre-écrou 19. Un capuchon 20 se visse sur l'extrêmité supérieure de la tige filetée creuse 14. Un tuyau en matière plastique 8 est relié à la valve 6 et pénètre comme indiqué précédemment à l'intérieur des conducteurs, ce tuyau présentant avantageusement un coude 21 de sorte que son extrêmité inférieure soit parallèle aux conducteurs 11.

Grâce aux valves 6 et 7 chacun des tronçons peut être mis sous pression à travers le bouchon de pressurisation sans avoir à percer l'enveloppe externe 10 étanche. Une liaison entre les valves 6 et 7 permet de court-circuiter le bouchon d'un point de vue pneumatique et d'appliquer continuement la pression malgré la présence sur un câble de plusieurs bouchons. Il est bien entendu possible de prévoir une vanne d'arrêt entre les deux valves 6 et 7 si nécessaire. Grâce à l'invention, il est possible de pressuriser un ou plusieurs tronçons, de purger les tronçons successifs par leur extrêmité pour les pressuriser et chasser l'humidité. L'injection de la résine permet d'assurer l'étanchéité de la liaison conduit matière plastique/valve à l'intérieur de la coquille.

Le bouchon selon l'invention peut être utilisé en chambre souterraine pour la pressurisation des câbles mixtes et la purge des câbles à gaine en polyéthylène raccordés avec des câbles à enveloppe en plomb, pour l'extension d'un réseau, le bouchon étant ponté, pour le sectionnement des câbles de grande longueur etc...

## Revendications

1. Bouchon de pressurisation des câbles de télécommunications ou autres comprenant deux demi-coquilles réunies par un joint et des colliers, mises en place sur le câble et, à l'intérieur desquelles est injectée une résine durcissable, caractérisé en ce qu'il comprend au moins un conduit auxiliaire (8, 9) débouchant par une valve (6, 7) à l'extérieur de la demi-coquille (1), la seconde extrêmité (12) du conduit (8, 9) pénétrant à l'intérieur du câble (10) entre les conducteurs (11) pour constituer une prise d'air pontable.

2. Bouchon de pressurisation selon la revendication 1, caractérisé en ce que les conduits (8, 9) sont fermés par des valves (6, 7).

3. Bouchon de pressurisation selon la revendication 1 ou 2, caractérisé en ce que l'extrêmité (12) du conduit (8, 9) est ogivale.
